Europäisches Patentamt

European Patent Office

Office européen des brevets

(19)

(11) EP 1 296 389 A1

(12) EUROPEAN PATENT APPLICATION

(43) Date of publication:
26.03.2003 Bulletin 2003/13

(51) Int Cl.7: H01M 2/16, H01M 4/58,
H01M 6/50

(21) Application number: 02256511.3

(22) Date of filing: 19.09.2002

(84) Designated Contracting States:
AT BE BG CH CY CZ DE DK EE ES FI FR GB GR
IE IT LI LU MC NL PT SE SK TR
Designated Extension States:
AL LT LV MK RO SI

(30) Priority: 19.09.2001 US 323373 P

(71) Applicant: Wilson Greatbatch Technologies, Inc.
Clarence, New York 14031 (US)

(72) Inventors:
• Paulot, William
Lancaster, New York 14086 (US)
• Frustaci, Dominick
Williamsville, New York 14221 (US)
• Freitag, Gary
East Aurora, New York 14052 (US)

(74) Representative: Colmer, Stephen Gary et al
Mathys & Squire
100 Gray's Inn Road
London WC1X 8AL (GB)

(54) **Silver vanadium oxide having a fine particle size for improved cell performance**

(57)   The present invention relates to the use of SVO classified to a particle size of about 25μ to about 75μ as a cathode active material in a lithium electrochemical cell. The cathode electrode is fabricated into an electrode assembly by overlaying it with an anode electrode and an intermediate separator. The reduced particle size of the SVO material means that a separator of reduced thickness is used, which provides space for more active materials in a casing of a given volume. The electrode assembly is then hermetically sealed in a casing and used as the power source for such devices as implantable medical devices.

Fig. 1

Printed by Jouve, 75001 PARIS (FR)

**Description**

CROSS REFERENCE TO RELATED APPLICATION

This application claims priority based on provisional application Serial No. 60/323,373, filed September 19, 2001.

BACKGROUND OF THE INVENTION

1. Field of the Invention

The present invention generally relates to the conversion of chemical energy to electrical energy and, more particularly, to lithium electrochemical cells. Still more particularly, the present invention relates to a lithium/silver vanadium oxide (SVO) cell. The SVO is processed to ensure that particles in a range of about 25 to 75 microns ($\mu$) are used. This enables the cell to include a separator of a thinner thickness than is possible with SVO having a particle size greater than about 75$\mu$.

In hermetically sealed lithium cells of the type powering implantable medical devices, it is desirable to have the separator function as a "thermal fuse" should the cell short circuit and be thrown into a run away chemical reaction. The present separator not only performs this function, it does it while having a thickness of about 0.001 inches, or less. This in turn reduces the volume of inactive components inside the casing so that more active materials are used, benefiting volumetric efficiency.

2. Prior Art

One of the concerns in a hermetically sealed lithium cell is that a short circuit condition does not result in a runaway chemical reaction with attendant gas generation and possible venting. If the internal temperature reaches the lithium melting point of about 180°C, the rapid exothermic reaction of lithium may cause catastrophic cell rupture. A solution is to prevent current flow once the internal temperature begins to approach the lithium melting temperature. This is done by having the separator function as a "thermal fuse" by melting and closing up the pores therein to block the passage of ions in the electrolyte solution between the electrodes, thereby at least partially shutting down the cell. After this, the internal cell temperature cools or at least does not increase further. If such cool down begins before the 180°C melting point of lithium is reached, catastrophic cell rupture is avoided.

In conventional lithium cells, the thermal shutdown separator is a two or more component structure. One component is of a relatively low melting temperature polymer, such as polyethylene functioning as the thermal fuse while the second is of a relatively higher melting temperature to provide structural integrity to the first component as it begins to melt. The second component is typically of a polypropylene material having a melting temperature in excess of about 150°C. This two-component construction can take the form of two bonded plies as in U.S. Patent No. 4,650,730 to Lundquist et al., a thermal shutdown material adhered to the second material as in U.S. Patent No. 4,973,532 to Taskier et al., and a construction where one of the materials is supported on the anode while the other is supported on the cathode. This latter design is described in U.S. application Serial No. 08/801,006, which is assigned to the assignee of the present invention and incorporated herein by reference. In any case, the second separator component acts in conjunction with the primary thermal fuse separator to prevent the latter from forming gaps or shrinking away from the electrode it is covering and, in that manner, failing to perform its thermal shutdown function.

The present thermal fuse separator does not need to be of a two or more component construction, such as of two plies, although it can be. What is important is that the separator have both a thermal shutdown function as well as being of a thickness of about 0.001 inches, or less. The classified SVO material of the present invention is far less likely to puncture such "thin" separators than previously used SVO materials of larger particle sizes. This, in turn, provides the present cell with enhanced volumetric efficiency in comparison to lithium cells having SVO of increased particle sizes, whether the separator is of a thermal shutdown type or not.

SUMMARY OF THE INVENTION

The present invention relates to the use of SVO classified to a particle size of about 25$\mu$ to about 75$\mu$ as a cathode active material in a lithium electrochemical cell. The SVO material is preferably mixed with a binder and a carbonaceous diluent, such as graphite, before being contacted to a current collector. The cathode electrode is fabricated into an electrode assembly by overlaying it with an anode electrode and an intermediate separator. The reduced particle size of the SVO material means that a separator of reduced thickness is used, which provides space for more active materials in a casing of a given volume. The electrode assembly can be in the shape of a spirally wound configuration, multi plate assembly, or have a serpentine shaped first electrode with plates of the other electrode interleaved between the folds. The electrode assembly is then hermetically sealed in a casing and used as the power source for such devices as implantable medical devices.

These and other features and advantages of the present invention will become increasingly more apparent to those skilled in the art by reference to the following description and the appended drawing.

BRIEF DESCRIPTION OF THE DRAWING

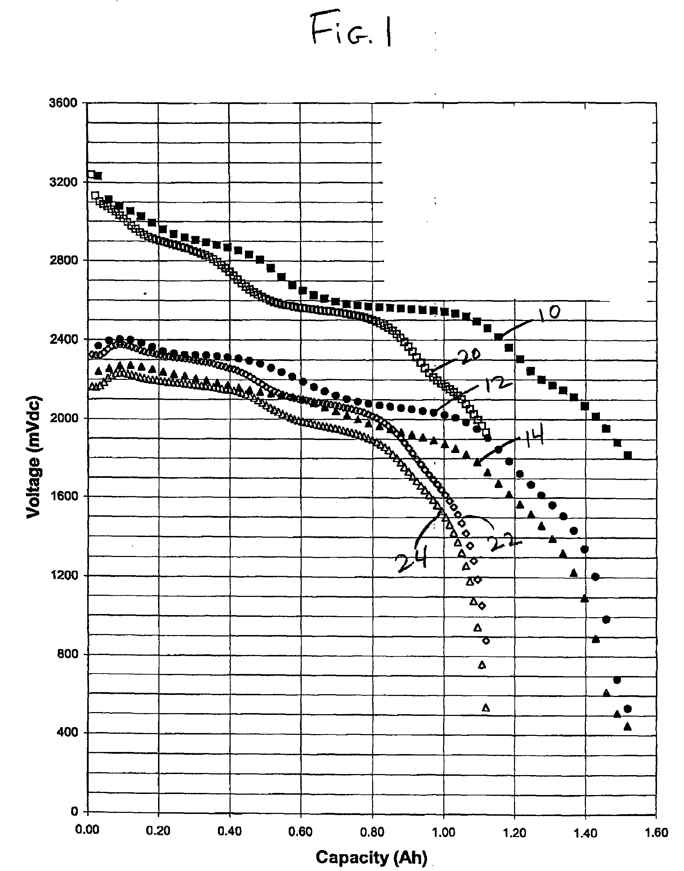

Fig. 1 is a graph constructed from the discharge of Li/SVO cells having the cathode active material with an average particle size of about 25µ in comparison to the prior art of about 200µ.

DETAILED DESCRIPTION OF THE INVENTION

As used herein, the term "pulse" means a short burst of electrical current of significantly greater amplitude than that of a pre-pulse current immediately prior to the pulse. A "pulse train" consists of at least two pulses of electrical current delivered in relatively short succession with or without open circuit rest between the pulses. An exemplary pulse train may consist of four 10-second pulses (23.2 mA/cm$^2$) with a 15 second rest between each pulse.

The cell of the present invention comprises an anode selected from Groups IA, IIA or IIIB metals, and their alloys. The preferred anode comprises lithium. Preferably, the anode is a thin sheet or foil of lithium, pressed or rolled on a metallic anode current collector to form an anode strip having an integrally extending tab or lead. Suitable current collectors are of nickel, copper, aluminum, titanium and tantalum, the former being preferred. In an electrode assembly with the anode electrically associated with a cathode, such as of a "jellyroll" configuration or multi plate design, the current collector tab is typically contacted by a weld to a cell case of conductive metal in a case-negative electrical configuration. The anode may also be formed in other geometric shapes, such as a bobbin shape, cylinder or pellet to allow alternate cell designs.

In that respect, the cell further comprises a solid cathode of an electrically conductive material. A preferred cathode active material comprises SVO formed from starting materials in a thermal decomposition reaction, a chemical addition reaction including chemical vapor deposition or hydrothermal synthesis in mixed states, or otherwise intimate contact of various metal oxides/metal oxides or metal oxide/elemental metal combinations. The starting materials include, but are not limited to, those classes of compounds known as nitrates, nitrites, carbonates, and ammonium salts.

In a preferred form of the SVO synthesis, a decomposable salt of silver is thermally treated with a vanadium-containing compound. Reaction temperatures range from about 360°C to about 550°C and occur in both an oxidizing atmosphere, an oxygen deficient atmosphere and an inert environment. Suitable silver-containing ingredients include Ag, $AgNO_3$, $AgNO_2$, $Ag_2O_2$, $AgVO_3$, $Ag_2CO_3$, and $Ag(CH_3CO_2)$ while the vanadium-containing compound is selected from $NH_4VO_3$, $AgVO_3$, $VO$, $VO_{1.27}$, $VO_2$, $V_2O_4$, $V_2O_3$, $V_3O_5$, $V_4O_9$, $V_6O_{13}$ and $V_2O_5$. Mixtures of the silver-containing compounds and vanadium-containing compounds can be used as well.

A conventional decomposition-produced SVO (D-SVO) reaction of silver nitrate and vanadium pentoxide is described in U.S. Patent Nos. 4,310,609 and 4,391,729, both to Liang et al. and both assigned to the assignee of the present invention and incorporated herein by reference. The decomposition reaction proceeds at a temperature of about 360°C to about 380°C according to the following reaction:

$$2AgNO_3 + 2V_2O_5 \rightarrow Ag_2V_4O_{11} + 2NO_x$$

This synthesis is characterized by a loss of weight from the release of $NO_x$ and results in SVO having a relatively low crystallinity.

Alternatively, SVO is synthesized using a combination reaction, resulting in combination-produced SVO (C-SVO). A conventional C-SVO reaction is described in U.S. Patent No. 5,221,453 to Crespi et al. and proceeds at a temperature of about 500°C from silver oxide and vanadium pentoxide according to the following reaction:

$$Ag_2O + 2V_2O_5 \rightarrow Ag_2V_4O_{11}$$

The resulting C-SVO has a well-defined crystalline structure, and a greater density than D-SVO material.

Another synthesis technique is described in U.S. Patent No. 5,955,218 to Crespi et al. (heat treating SVO at 390°C to 580°C after its initial synthesis, whether it be by decomposition or combination).

Other methods of preparing SVO include, for example, a sol-gel method as described in U.S. Patent No. 5,558,680 to Takeuchi et al., a hydrothermal synthesis in an aqueous environment under elevated pressure, and a method of preparing amorphous SVO as described in U.S. Patent No. 5,498,494 to Takeuchi et al. Both of these patents are assigned to the assignee of the present invention and incorporated herein by reference.

The resulting silver vanadium oxide has the general formula $Ag_xV_2O_y$ in any one of its phases. These include β-phase SVO wherein in the general formula of $Ag_xV_2O_y$, x = 0.35 and y = 5.18, γ-phase SVO wherein x = 0.74 and y = 5.37 and ε-phase wherein x = 1.0 and y = 5.5. Still another form comprises a mixture of the β- and γ-phases of silver vanadium oxide, as described in U.S. Patent No. 5,545,497 to Takeuchi et al., which is assigned to the assignee of the present invention and incorporated herein by reference.

Regardless of the synthesis technique, the current invention uses SVO particles of a size less than about 75μ and, more preferably, in a range of 25μ to about 75μ. To ensure the SVO particles are of the proper size, they are passed through a 75-micron sieve. The remainder of the SVO material that is larger than 75μ is processed by grinding/milling it to the appropriate size. Additionally, or in the alternative, the SVO material larger than 75μ is reheated to a temperature in a range of about 480°C to about 550°C, preferably about 500°C for about 30 minutes to about 6 hours. This additional heating serves to break down the particle size to within the useful range or to a reduced size so that upon further grinding, the proper size is readily attainable.

The SVO material may be formed into a cathode structure with the aid of a suitable binder material, preferably a powder fluoro-resin, such as polytetrafluoroethylene powder and a material having electronic conductive characteristics, such as carbon black and graphite. Further, the cathode active mixture may be rolled, spread or pressed onto a suitable current collector. A suitable conductive material for the current collector is selected from stainless steel, titanium, tantalum, platinum, gold, aluminum, cobalt nickel alloys, nickel-containing alloys, highly alloyed ferritic stainless steel containing molybdenum and chromium, and nickel-, chromium- and molybdenum-containing alloys. The thusly-prepared cathode in the form of individual plates is interleaved between the folds of a serpentine shaped anode or a strip of the cathode is overlaid with an anode strip and spirally wound into a structure similar to a "jellyroll." An alternate form of the cathode is of a free standing sheet as described in U.S. Patent No. 5,435,874 to Takeuchi et al., which is assigned to the assignee of the present invention and incorporated herein by reference. The free standing sheet is then pressed to the current collector to form the cathode.

While the present invention has been described with respect to SVO as the preferred cathode active material, other useful active materials include copper silver vanadium oxide, manganese dioxide, cobalt nickel, nickel oxide, copper oxide, copper sulfide, iron sulfide, iron disulfide, titanium disulfide, copper vanadium oxide, and mixtures thereof. The main criteria are that the cathode active material has particles of about 75μ or less. The cathode comprises between about 0 to 3 weight percent of the conductive additive, 0 to 3 weight percent of the binder material, and between about 94 to 99 weight percent of the cathode active material.

The cell of the present invention includes a separator to provide physical segregation between the anode and cathode electrodes. The separator is of an electrically insulative material to prevent an internal electrical short circuit between the electrodes, and the separator material also is chemically unreactive with the anode and cathode active materials and both chemically unreactive with and insoluble in the electrolyte. In addition, the separator material has a degree of porosity sufficient to allow flow there through of the electrolyte during the electrochemical reaction of the cell. The form of the separator typically is an envelope surrounding each of the electrodes. Alternatively, the separator is a sheet placed between the anode and cathode electrodes. Such is the case when the anode is folded in a serpentine-like structure with a plurality of cathode plates disposed intermediate the anode folds and received in a cell casing or when the electrode combination is rolled or otherwise formed into a cylindrical "jellyroll" configuration.

Illustrative separator materials include fabrics woven from fluoropolymeric fibers of polyethylenetetrafluoroethylene, polytetraflouroethylene and polyethylenechlorotrifluoroethylene. Other suitable separator materials include non-woven fabrics or cloths of polypropylene (PP), polyethylene (PE), glass fiber materials, and ceramics.

One of the benefits of the present invention is that using SVO particles of about 75μ or less means a separator of reduced thickness is used without the SVO active material puncturing or otherwise compromising its structural integrity. The reason for this is that while the SVO particles are irregularly shaped, they are relatively "fine" and do not have edges that are pronounced enough to puncture the separator.

The preferred separator is a single layer of polyethylene about 0.001 inches thick commercially available under the designation TONEN 25. This material is a non-woven cloth or fabric of randomly oriented polyethylene fibers. An alternate separator is of a multi ply construction having a thickness of about 0.001 inches. An exemplary multi ply separator is commercially available under the designation CELGARD® 2300 (PP/PE/PP). Conventionally built Li/SVO cells having SVO particles of a size greater than about 75μ would tear such thin separators. Therefore, they must use, for example, a CELGARD® 4560 separator, which is a single ply construction of PP having a thickness of about 0.0035 inches. The CELGARD® brand separators are of films stretched just enough to provide micro tears which accommodate ion flow there through.

Not only must the separator prevent direct physical contact between the anode and cathode electrodes while supporting ion movement there through, it must also function as a thermal protection barrier. In the present invention, polyethylene having a melting temperature less than about 135°C is preferred for this purpose. This temperature is low enough so that the separator begins to melt to stop or substantially block ion flow there through well before the melting temperature of lithium at about 180°C. While polyethylene is preferred, it is contemplated by the scope of the present invention that any one of the listed separator materials having a melting temperature less than that of lithium can function as a thermal fuse for the cell.

The preferred TONEN 25 material performs the "thermal shutdown" function without the provision of a secondary separator component, as in the CELGARD® brand separators. The reason is believed to be the non-woven fibrous nature of the TONEN 25 single layer polyethylene separator cloth. The random orientation of the non-woven polyethylene fibers prevents the melted material from forming gaps or shrinking away from the covered electrode, whether the separator is covering the anode or the cathode. A film material that does not have this attribute, as in the case of the CELGARD® 2300 material, is the reason for the multi-ply construction.

The primary electrochemical cell includes a nonaqueous electrolyte having an inorganic, ionically conductive salt dissolved therein. More preferably, the electrolyte has a lithium salt dissolved in a mixture of a low viscosity solvent and a high permittivity solvent. The salt is selected from the group of $LiPF_6$, $LiBF_4$, $LiAsF_6$, $LiSbF_6$, $LiClO_4$, $LiO_2$, $LiNO_3$, $LiAlCl_4$, $LiGaCl_4$, $LiC(SO_2CF_3)_3$, $LiN(SO_2CF_3)_2$, $LiSCN$, $LiO_3SCF_3$, $LiC_6F_5SO_3$, $LiO_2CCF_3$, $LiSO_6F$, $LiB(C_6H_5)_4$, $LiCF_3SO_3$, and mixtures thereof, and serves as the vehicle for migration of the anode ions to intercalate or react with the cathode active material.

Suitable low viscosity solvents include esters, linear and cyclic ethers and dialkyl carbonates such as tetrahydrofuran (THF), methyl acetate (MA), diglyme, triglyme, tetraglyme, dimethyl carbonate (DMC), 1,2-dimethoxyethane (DME), 1,2-diethoxyethane (DEE), 1-ethoxy,2-methoxyethane (EME), ethyl methyl carbonate, methyl propyl carbonate, ethyl propyl carbonate, diethyl carbonate, dipropyl carbonate, and mixtures thereof. High permittivity solvents include cyclic carbonates, cyclic esters and cyclic amides such as propylene carbonate (PC), ethylene carbonate (EC), butylene carbonate, acetonitrile, dimethyl sulfoxide, dimethyl, formamide, dimethyl acetamide, $\gamma$-valerolactone, $\gamma$-butyrolactone (GBL), N-methyl-pyrrolidinone (NMP), and mixtures thereof. The preferred electrolyte for a lithium primary cell is 0.8M to 1.5M $LiAsF_6$ or $LiPF_6$ dissolved in a 50:50 mixture, by volume, of PC as the preferred high permittivity solvent and DME as the preferred low viscosity solvent.

The preferred form of the primary alkali metal/solid cathode electrochemical cell is a case-negative design wherein the anode is in contact with a conductive metal casing and the cathode contacted to a current collector is the positive terminal. The cathode current collector is in contact with a positive terminal pin via a lead of the same material as the current collector. The lead is welded to both the current collector and the positive terminal pin for electrical contact.

A preferred material for the casing is titanium although stainless steel, mild steel, nickel-plated mild steel and aluminum are also suitable. The casing header comprises a metallic lid having an opening to accommodate the glass-to-metal seal/terminal pin feedthrough for the cathode electrode. The anode electrode is preferably connected to the case or the lid. An additional opening is provided for electrolyte filling. The cell is thereafter filled with the electrolyte solution described hereinabove and hermetically sealed, such as by close-welding a titanium plug over the fill hole. The cell of the present invention can also be constructed in a case-positive design.

In a 7.3 cc cell, capacity densities in the range of 0.32 Ah/cc are obtained by the present invention combining the SVO having a particle size range of about 25µ to about 75µ in conjunction with a thermal shutdown separator having a thickness of about 0.001 inches, or less. This contrasts to capacity densities of about 0.24 Ah/cc for conventionally sized SVO materials of a comparable phase type requiring separators about 0.0035 inches thick. Put another way, nearly equivalent capacity densities are obtained with about a 14% improvement in rate capability or power for the present invention cell in comparison to a lithium cell having SVO particles of about 200µ. In that respect, a Li/SVO cell according to the present invention is particularly useful for powering an implantable medical device, such as a cardiac pacemaker, cardiac defibrillator, drug pump, nerve stimulator, and the like. The reason is that the smaller the size of the cell, the smaller the overall device package implanted into a body being assisted.

The electrochemical cell of the present invention discharges in the following manner. When the ionically conductive electrolytic solution becomes operatively associated with the anode and the cathode electrodes, an electrical potential differential is developed between terminals operatively connected to the anode and the cathode. The electrochemical reaction at the anode includes oxidation to form metal ions during discharge of the cell. The electrochemical reaction at the cathode involves conversion of ions that migrate from the anode to the cathode into atomic or molecular forms.

Benefits attributed to the present invention are illustrated by the following examples:

EXAMPLE I

Two groups of Li/SVO cells were built, one according to the present invention, the other according to the prior art. Each cell had lithium metal pressed on a nickel current collector screen for the anode. The cathodes comprised powdered D-SVO prepared according to U.S. Patent No. 5,545,497 to Takeuchi et al. and pressed on a titanium current collector screen. The present invention cells had about 25µ size D-SVO particles while the prior art cells had about

200μ size particles. Each cell had an electrode assembly comprising an elongate anode in a serpentine shape with individual cathode plates interleaved between the folds. The individual electrodes were placed in their own separator envelopes. For the present invention cells, the separator had a thickness of about 0.001 inches while the prior art cells had a microporous polypropylene membrane 0.0035 inches thick. This means that both the present invention and prior art cells had two layers of the respective separator materials sandwiched between the anode and cathode. The electrode assemblies were then hermetically sealed in stainless steel casings in a case negative configuration and activated with an electrolyte solution of 1.0M $LiAsF_6$ dissolved in a mixture of PC:DME at a 1:1 volumetric ratio. Dibenzyl carbonate in a concentration of about 0.05M was also added to reduce voltage delay.

A constant resistive load of 7.5 kΩ was applied to the cells during an initial pre-discharge period. The pre-discharge period is referred to as burn-in and depleted the cells of approximately 1% of their theoretical capacity. Following burn-in, the cells were discharged by applying a pulse train every thirty minutes until depletion of the useful cell life. The pulse train consists of four 10-second pulses (23.2 mA/cm$^2$) with a 15 second rest after pulse. The average results of these tests are set forth below in Table 1 and graphically depicted in Fig. 1.

In Fig. 1, curve 10 was constructed from the average background voltages of the present invention cells while curves 12 and 14 were constructed from the average pulse 1 mimina (P1 min.) and pulse 4 mimina (P4 min.), respectively. In contrast, curves 20, 22 and 24 are the respective average discharge curves for the prior art cells.

Table 1

| Comparison of Cell Configuration Between Li/SVO Cells of Various Particle Sizes | | |
|---|---|---|
| | 25μ particle size (avg.) | 200μ particle size (avg.) |
| Electrode Surface Area (cm$^2$) | 71.3 | 53.5 |
| Active cell capacity (Ah) | 1.64 | 1.20 |
| Current Rating (at 31 mA/cm$^2$) | 2.21 | 1.66 |
| Number of Cathode Plates | 8 | 6 |

The cells of the present invention had significantly greater average discharge capacities than the prior art cells. This is due in part to the reduced volume of passive components afforded by the smaller sized SVO particles. The present invention SVO particles enable a separator of 0.001 inches to be employed instead of the customary 0.0035-inch separator. This resulted in two more cathode plated fitting into a casing large enough to house six plates in the conventional cell design. The added cathode plates mean there is increased electrode surface area, which directly impacts the theoretical capacity and the current rating.

EXAMPLE II

Two Li/SVO cells were constructed according to the procedure described in Example I. One of the cells used TONEN 25 as the separator material while the other used CELGARD® 2300. The cells were subjected to short circuit testing that resulted in the onset of a runaway chemical reaction. At such time as the cells internal temperature reached 135°C, the polyethylene component of the separators melted and shut down cell discharge. The cells were then destructively analyzed and the separators subjected to Gurley testing. The results of the Gurley tests are shown in Table 2.

Table 2

| | | Time (sec.) | | | | |
|---|---|---|---|---|---|---|
| Cell Serial No. | Separator Material | Center | End 1 | End 2 | Cathode Plate 1 | Cathode Plate 2 |
| 784 | CELGARD® 2300 | 355.7 | 196.5 | 208.4 | 236.1 | 195.2 |
| 969 | TONEN 25 | 250.7 | 326.0 | 275.3 | 257.5 | 211.7 |

The center reading was taken from the anode separator at about a middle position of its length while the ends 1 and 2 were taken from its opposed ends. The cathode plates 1 and 2 were taken from separators enveloping two of the cathode plates between the folds of the serpentine anode.

In each case, the very large time for the Gurley test indicates the separator material melted to shut down ion transfer there through. Therefore, these separator materials are suitable as thermal fuse materials.

It is appreciated that various modifications to the present inventive concepts described herein may be apparent to those of ordinary skill in the art without departing from the spirit and scope of the present invention as defined by the herein appended claims.

**Claims**

1. An electrochemical cell, which comprises:

   a) an anode;
   b) a cathode comprising a cathode active material of a particle size of 75μm or less;
   c) a separator disposed intermediate the anode and the cathode to prevent direct physical contact between them; and
   d) an electrolyte activating the anode and the cathode.

2. The electrochemical cell of claim 1 wherein the cathode active material is selected from the group consisting of silver vanadium oxide, copper silver vanadium oxide, manganese dioxide, cobalt nickel, nickel oxide, copper oxide, copper sulfide, iron sulfide, iron disulfide, titanium disulfide, copper vanadium oxide, and mixtures thereof.

3. The electrochemical cell of claim 2 wherein the silver vanadium oxide has the general formula $AG_xV_2O_y$ and is selected from the group consisting of β-phase having in the general formula x = 0.35 and y = 5.18, γ-phase having in the general formula x = 0.74 and y = 5.37, ε-phase having in the general formula x = 1.0 and y = 5.5, and mixtures thereof.

4. The electrochemical cell of any preceding claim wherein the cathode active material essentially consists of particles in a range of 25 to 75μm.

5. The electrochemical cell of any preceding claim wherein the separator has a thickness of 0.025 mm (0.001 inches) or less.

6. The electrochemical cell of any preceding claim wherein the separator is a non-woven fabric.

7. The electrochemical cell of any preceding claim wherein the separator comprises polyethylene.

8. The electrochemical cell of any preceding claim wherein the separator is of either a multi layer or a single layer construction.

9. The electrochemical cell of any preceding claim wherein the separator is of a material that melts at a temperature less than 180°C.

10. The electrochemical cell of any preceding claim wherein the cathode comprises a conductive additive.

11. The electrochemical cell of claim 10 wherein the conductive additive is selected from the group consisting of carbon and graphite.

12. The electrochemical cell of any preceding claim wherein the cathode component comprises between 0 to 3 weight percent of a conductive additive, 0 to 3 weight percent of a binder material, and between 94 to 99 weight percent of the silver vanadium oxide.

13. The electrochemical cell of any preceding claim wherein the electrolyte is nonaqueous.

14. The electrochemical cell of claim 13 having a lithium anode, a cathode comprising silver vanadium oxide, as cathode active material, having a particle size of 75 μm or less.

15. A method for providing an electrochemical cell which comprises the steps of:

   a) providing an anode;
   b) providing a cathode of a cathode active material having a particle size of 75 μm or less;
   c) positioning a separator between the anode and the cathode; and
   d) activating the anode and the cathode with an electrolyte.

**16.** The method according to claim 15 wherein the anode; cathode; cathode active material; separator and/or electrolyte is defined in any of claims 2 to 14.

**17.** Use in an electrochemical cell of a cathode active material of a particle size of 75 µm or less to enable a separator; interposed between a cathode and an anode and effective in service as a thermal fuse, to be fabricated at a thickness of 0.026 mm or less.

**18.** Use according to claim 17 wherein the separator is of single component construction.

# FiG. 1

## EUROPEAN SEARCH REPORT

Application Number

EP 02 25 6511

European Patent Office

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 022 798 A (TOKYO SHIBAURA ELECTRIC CO) 26 July 2000 (2000-07-26)<br><br>* paragraphs [0007],[0008],[0017]-[0021],[0032],[0037], [0041]-[0044],[0054],[0091],[0092]; example 1 * | 1,2, 4-11,13, 15-18 | H01M2/16 H01M4/58 H01M6/50 |
| X | US 5 952 125 A (BI XIANGXIN ET AL) 14 September 1999 (1999-09-14)<br><br>* column 9-10 * | 1,7,8, 10,11, 13,15,16 | |
| X | US 5 512 214 A (KOKSBANG RENE) 30 April 1996 (1996-04-30)<br><br>* column 3, line 28-52 *<br>* column 6, line 32-67 * | 1,8,10, 11,13, 15,16 | |
| A | EP 0 550 262 A (GRACE W R & CO) 7 July 1993 (1993-07-07)<br>* page 8, line 11-39; claims 1-4 * | | TECHNICAL FIELDS SEARCHED (Int.Cl.7) H01M |
| A | US 6 093 506 A (CHEN KAIMIN ET AL) 25 July 2000 (2000-07-25) | | |
| A,D | EP 0 689 256 A (GREATBATCH W LTD) 27 December 1995 (1995-12-27) | | |

The present search report has been drawn up for all claims

| Place of search | Date of completion of the search | Examiner |
|---|---|---|
| MUNICH | 15 January 2003 | Hammerstein, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 02 25 6511

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2003

| Patent document cited in search report | | Publication date | Patent family member(s) | | Publication date |
|---|---|---|---|---|---|
| EP 1022798 | A | 26-07-2000 | CN | 1265525 A | 06-09-2000 |
| | | | EP | 1022798 A2 | 26-07-2000 |
| | | | JP | 2000315481 A | 14-11-2000 |
| | | | TW | 439309 B | 07-06-2001 |
| US 5952125 | A | 14-09-1999 | EP | 1016149 A1 | 05-07-2000 |
| | | | JP | 2001510930 T | 07-08-2001 |
| | | | WO | 9904441 A1 | 28-01-1999 |
| | | | US | 6130007 A | 10-10-2000 |
| US 5512214 | A | 30-04-1996 | NONE | | |
| EP 0550262 | A | 07-07-1993 | BR | 9205173 A | 29-06-1993 |
| | | | CA | 2085380 A1 | 28-06-1993 |
| | | | DE | 69218750 D1 | 07-05-1997 |
| | | | DE | 69218750 T2 | 10-07-1997 |
| | | | EP | 0550262 A1 | 07-07-1993 |
| | | | US | 5453333 A | 26-09-1995 |
| | | | JP | 5247253 A | 24-09-1993 |
| | | | ZA | 9209949 A | 14-07-1993 |
| | | | JP | 5258740 A | 08-10-1993 |
| US 6093506 | A | 25-07-2000 | US | 5895733 A | 20-04-1999 |
| | | | DE | 69806980 D1 | 12-09-2002 |
| | | | EP | 0856490 A1 | 05-08-1998 |
| EP 0689256 | A | 27-12-1995 | US | 5545497 A | 13-08-1996 |
| | | | AT | 171309 T | 15-10-1998 |
| | | | AU | 687999 B2 | 05-03-1998 |
| | | | AU | 1778095 A | 04-01-1996 |
| | | | DE | 69504766 D1 | 22-10-1998 |
| | | | DE | 69504766 T2 | 04-02-1999 |
| | | | EP | 0689256 A1 | 27-12-1995 |
| | | | JP | 8045510 A | 16-02-1996 |

EPO FORM P0459

For more details about this annex : see Official Journal of the European Patent Office, No. 12/82